(19) Europäisches Patentamt

European Patent Office

Office européen des brevets

(11) EP 2 576 711 B1

## (12) EUROPEAN PATENT SPECIFICATION

(45) Date of publication and mention
of the grant of the patent:
**23.09.2015 Bulletin 2015/39**

(21) Application number: **11722425.3**

(22) Date of filing: **30.05.2011**

(51) Int Cl.:
***C09D 11/00*** *(2014.01)*

(86) International application number:
**PCT/EP2011/058806**

(87) International publication number:
**WO 2011/151277 (08.12.2011 Gazette 2011/49)**

### (54) **LOW VOC COLORANT COMPOSITIONS**

Farbstoffzusammensetzungen mit geringem VOC-Gehalt

Compositions de colorant à faible teneur en VOC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2010 EP 10164579
22.11.2010 US 201061415986 P**

(43) Date of publication of application:
**10.04.2013 Bulletin 2013/15**

(73) Proprietor: **Akzo Nobel Coatings International B.V.
6824 BM Arnhem (NL)**

(72) Inventors:
• **MCLACHLAN, Fiona
London SW7 1NA (GB)**

• **SASADA, Paul John Christopher
Farnham Common Buckinghamshire SL2 3EL
(GB)**
• **RICHARDSON, Alban Elroy
High Wycombe Buckinghamshire HP12 4SA (GB)**

(74) Representative: **Akzo Nobel IP Department
Velperweg 76
6824 BM Arnhem (NL)**

(56) References cited:
**WO-A1-00/22050       WO-A1-01/10923
WO-A2-2005/023836   WO-A2-2008/055244
US-A1- 2006 063 871   US-B1- 7 608 646**

**Description**

This invention relates to liquid colorant compositions which are useful in colouring both solventborne and waterborne base paints and which contain low amounts of or are substantially free of volatile organic compounds. In particular, compositions are provided which do not block open nozzles in in-store tinting machines and which provide good paint properties, in particular in architectural paints. It also provides in-store tinting machines fitted with the colorants.

Colorants are essentially concentrated pigment compositions containing stably dispersed pigments. The characteristics of such compositions are such that they can be added, alone or in combination with other colorants containing different pigments, to a base paint and mixed in to achieve a desired colour of a ready for use paint. A base paint differs from a ready for use (RFU) paint in that the colour has not been finally adjusted.

By having a number of the colorants each formulated using pigments of different hues, a large number of coloured paints can be provided by simply mixing at least one of the colorant(s) with the appropriate base paint in accordance with a predetermined recipe. Even more colours can be produced by providing a plurality of base paints, themselves varying in hue, including clear base paint.

The utility of known systems comprising colorants and base paints is that paints of many colours may be produced very quickly by simply mixing the required colorant composition(s) with the selected base paint. This is especially important for small stores where a very large range of coloured paints may be supplied on demand without the need for keeping a stock of paint covering the complete colour range.

Such in-store tinting systems usually comprise up to twenty colorants (also known as tinters) and, say, three base paints in each category. In this way light, medium and deep colours can be made.

The colorants are usually housed in a tinting machine from which the individual colorants are dispensed according to the manufacturer's recipe from containers connected to or fitted with exit nozzles. Dosage may be manual or controlled by a computer. The problem with this type of system is that after dispensing is completed there is inevitably a residue of the colorant left in or on the nozzle that dries over time and partially or completely blocks the nozzle making subsequent accurate dispensing impossible. This is an even more severe problem for open nozzle tinting machines which have nozzles without a tap or valve system to isolate the colorant from the atmosphere once an addition has been made. In such machines colorants remain exposed to the atmosphere and, unless properly formulated, will eventually dry and block the nozzle.

Tinting machine manufacturers have attempted to overcome the problem by providing a degree of humidification in the vicinity of the nozzles. Whilst this approach reduces the problem it nevertheless adds complexity and cost to the manufacture and maintenance of the machines.

Known colorants use humectants to reduce the problem of nozzle blockage. Unfortunately, the humectants themselves tend to be volatile, contributing to the total volatile organic content (VOC) as they evaporate. Of course, as they evaporate they leave behind the dry residue preferred to above which eventually blocks the dispensing nozzles.

Other known colorants use humectants which, because of their low volatility, do not contribute to VOC. However, these tend to plasticise the binder polymer resulting in soft final coatings which are easily damaged in normal use.

Known colorants may also contain stabilising agents to help disperse and stabilise the pigments in the colorant. However, dried coatings derived from colorants containing large amounts of stabilising agents also tend to be soft.

Thus there is a need for colorant compositions which do not block nozzles, are essentially VOC free and do not produce soft dried coatings.

Accordingly there is provided an aqueous liquid colorant composition having a volatile organic content up to 50g/l and suitable for colouring aqueous or solventborne architectural coatings and base paints comprising, based on the total weight of the composition,

　　i) from 2 to 22% of non-volatile organic liquid having a vapour pressure up to 1.3 N/m$^2$ at 25°C
　　ii) from 2 to 13% of stabilising agent
　　iii) from 4 to 77% of colour pigment
　　iv) from 0.1 to 8% of rheology modifying clay
　　v) from 0 to 20% of extender

wherein the ratio of the combined weight of iii)+iv)+v) : the combined weight of i)+ii) is from 0.8 to 2.75:1 and the combined weight of the non-volatile organic liquid i) and the stabilising agent ii) is no greater than 28% and the combined weight of the rheology modifying clay iv) and the extender v) is at least 2% when the amount of colour pigment is less than 51%.

In a further aspect of the invention there is provided an architectural coating composition comprising or consisting of at least one colorant according to the present invention and a base paint.

In a still further aspect of the invention there is provided a tinting scheme comprising or consisting of at least one basepaint and at least one colorant of the present invention.

In a yet further aspect of the invention there is provided a tinting machine for in-store tinting of base paint comprising or consisting of at least one colorant of the present invention in a container, the container fitted or connected to an exit nozzle, preferably an open nozzle. Preferably the colorant is packaged in a container having a volume of from 0.5 to 5 litres, more preferably, the base paint is packaged in a container having a volume of from 0.5 to 25 litres.

There is also provided a method for in-store production of architectural coating including the steps of dispensing at least one colorant selected from a tinting machine of the invention into a base paint.

Preferably the colorant is free of polymeric binder as its presence tends to make nozzle blockage worse.

Preferably the colour pigment comprises from 4 to 70wt%, more prefereably from 4 to 66wt%, yet more preferably from 4 to 55 wt%, still more preferably from 4 to 40wt%, even more preferably from 5 to 30wt% and most preferably from 5 to 20wt%.

### Non- volatile organic liquid

The non-volatile organic liquid is a liquid that is not volatile at 25°C. For the purposes of this invention, an organic liquid having a vapour pressure up to $1.3N/m^2$ is non-volatile. The lack of volatility means that it does not evaporate and thus does not contribute to VOC. It is non-micellising.

Any non-volatile organic material will do so long as it is a flowable liquid when tested in accordance with the syringe test described hereinbelow.

Suitable examples of such materials include polyethylene glycols (PEG), also known as polyethylene oxide (PEO) and polyoxyethylene (POE).

Polyethylene glycols are preferred, more preferably PEG of molecular weight of at least 200 Daltons. Even more preferably the molecular weight is from 200 to 800, still more preferably from 200 to 600 Daltons, yet more preferably from 300 to 500 Daltons and most preferably PEG of molecular weight 400 Daltons is preferred.

Preferably, the amount of non-volatile organic liquid comprises or consists from 4 to 22, more preferably from 4 to 20, even more preferably from 4 to 19.5, yet more preferably from 6 to 17wt% and most preferably from 4 to 17wt%.

### Stabilising Agents

Stabilising agents are amphipathic organic materials containing both hydrophilic and hydrophobic groups. They may be anionic, cationic or non-ionic. Coating compositions, in particular architectural coatings, usually consist of anionic and/or non-ionic ingredients and thus cationic stabilising agents are preferably avoided. Above a minimum concentration in a liquid, stabilising agents form micelles. Suitable stabilising agents include surfactants and dispersants. There is no accepted distinction between the two but generally the higher molecular weight stabilising agents of number average molecular weight more than 2000 Daltons are usually referred to as dispersants whilst stabilsizing agents of lower molecular weight are referred to as surfactants.

Surfactants are preferred as they tend to be more compatible with both solventborne and waterborne base paints. Anionic and/or non-ionic stabilising agents are preferred. Most preferred are stabilising agents comprising mixtures of both anionic and non-ionic surfactants. Whilst not wishing to be bound by this, it is thought that this is partly because the non-ionics provide long term dispersion stability whilst the anionics are important for wetting the pigments during the dispersion stage of colorant production. We have also found that such a combination is able to produce stable dispersions of many different pigments. A still further advantage is that when more than one colorant is added to a base paint to make the required colour, the different pigments from each colorant remain stable in the final paint.

The primary role of the stabilising agent in the colorant composition is to disperse and prevent agglomeration of the pigment particles and thereby produce a stable dispersion. Generally, pigments which are ground to fine particle size to develop the colour also have the greater surface area. Consequently more stabilising agent is required to stabilise colorants containing such high surface area pigments than those based on coarser pigments. However, no more than 13wt% of the stabilising agent should be used in the colorant as this causes inadequate water resistance in the derived dried paint films.

As the colorants are for use in both solventborne and waterborne basepaints an important feature of the stabilising agent is that it may be added to both types of base paint without flocculation or other detrimental effect.

Examples of suitable stabilising agents for use in this invention include fatty acid amide ethoxylates such as the Bermodol SPS types including 2525, 2528, 2532, 2541 and 2543 and alkyl glucosides such as the Glucopon, Triton and Dymsol types and sorbitol fatty esters such as the Tween and Span types and alkyl ethoxylates such as the Emulsogen LCN types and alkyl phenol ethoxylates such as the Berol types and anionic surfactants based on ethoxylated phosphated alcohols such as Dispersogen LFH, Dispersogen LFS, Nuosperse FA 196and Disperbyk 102 and salts of polyelectrolytes such as Orotan 731 and phospholipid type surfactants such as Soya Lecithin. Preferably, polyamide stabilising agents comprising at least two amino anchoring groups are not used.

Preferably, the stabilising agent is a flowable liquid as a 90wt% solution in water, more preferably at 95wt% and most preferably it is a flowable liquid as a neat material at 25°C according to the syringe test hereinbelow described. Stabilising agents which do not meet these criteria tend to produce colorants that are more prone to blocking.

Stabilising agents of number average molecular weight up to 2000 Daltons are preferred because they tend to be flowable liquids according to the syringe test. As hereinbefore discussed, these are also known as surfactants.

Preferably, nonyl phenol ethoxylate surfactants are avoided as they are thought to damage the aquatic and marine environment.

Preferably, the colorants are free of alkyl polyglycoside surfactants as they are poor for colorant stability. They are also viscous materials and thus difficult to handle at room temperature. Furthermore their strong yellow colour is a disadvantage when formulating pastel shades, including white, as it can come through to the final paint.

Preferably the amount of stabilising agent is from 3 to 13wt%, more preferably from 3 to 12.5, even more preferably from 4 to 12.0wt%, yet more preferably from 4 to 11.0 wt% and most preferably from 2 to 12.0wt%.

The combined amount of non-volatile organic liquid and stabilising agent must not exceed 28wt% based on the total weight of the colorant, otherwise the resulting dried paint film is unacceptably soft and easily damaged. Preferably, the combined amount comprises up to 26wt%, more preferably from 5 to 26wt%, even more preferably from 10 to 25, yet more preferably from 10 to 24 and most preferably from 13 to 23.5wt%.

**Rheology modifying clay**

Rheology modifying clays are minerals comprising high aspect ratio sub-micron sized particles and which can form stable dispersions in aqueous media. The particles in such dispersions form loosely associated networks throughout the aqueous medium of the colorant thereby imparting rheology to the colorant.

Suitable examples of rheology modifying clays include attapulgite such as the Attagel types including Attagel 50, bentonite such as the Bentone types, including Bentone EW and the Optigel types and laponite, including Laponite RD and Laponite RDS.

Preferably, the rheology of the colorant is shear thinning being either pseudoplastic or thixotropic, More preferably the Stormer viscosity at 25°C is from 40 to 150 KU, even more preferably from 60 to 120 KU and most preferably from 60 to 80 KU. Preferably the low shear viscosity (LSV) is from 0.3 to 10.0Pa.s, more preferably from 0.5 to 6.0Pa.s and most preferably from 0.65 to 4.0 Pa.s measured at 25°C using a rotational rheometer such as a TA Instruments AR 1500ex with a 40mm flat steel plate geometry and a gap of 500 microns with a method defined by a continuous logarithmic ramp in shear rate from 0.01 to 1000 s$^{-1}$ and back, of <u>duration</u> 2 minutes in each direction and 10 points per decade and taking the viscosity value from the return curve data. A colorant having a LSV below the minimum specified herein will tend to show settlement of the pigments in the machine canisters and will gradually leak from the open nozzles. Conversely, too high a LSV will make accurate dispensing impossible because of the high start up pressures needed to commence flow.

Preferably the Medium Shear Viscosity(MSV) measured using a Stormer viscometer (available from e.g. Sheen Instruments Ltd) at 25°C and after running for 1 minute is from 40 to 150 Krebs Units (KU), even more preferably from 60 to 120 KU and most preferably from 60 to 80 KU. A colorant having a MSV below the minimum specified herein will show a tendency to drip from the nozzles. Conversely too high a MSV will require excessive pumping pressures.

Preferably the High Shear Viscosity (HSV) is from 0.009 to 1 Pa.s, more preferably from 0.01 to 0.8 Pa.s and even more preferably from 0.02 to 0.4 Pa.s measured at 25°C and a shear rate of 10000s$^{-1}$ using a Cone and Plate Viscometer, available from REL Ltd or Sheen Instruments and described in ISO 2884. the method as described above for LSV. Too high a HSV will make pumping the colorant impossible and give problems of excessive rates of pump wear. Conversely too low a HSV will give problems of dripping from the nozzles.

Preferably, the amount of rheology modifying clay comprises from 0.3 to 8wt%, more preferably from 1 to 8wt%, even more preferably from 1 to 6wt% and most preferably from 2 to 5wt%.

The colorant is-free of organic rheology modifers to ensure compatibility with both aqueous and solventborne basepaints. Examples of organic rheology modifiers include the cellulosics; the non-ionic synthetic associative thickeners; hydrophobically modified alkali swellable emulsions and alkali swellable synthetic emulsions.

**Extender**

Extenders are essentially non-opacifying and they have little or no effect on the hue of the colorant. They are particulate inorganic materials which have a refractive index the same as or similar to that of the polymer binder used in the base paint. Since the opacifying strength of any particulate material is a consequence of the difference in refractive index of the material and the medium in which it is dispersed and its particle size, such extenders have little or no opacity in resins typically used as binders in coatings, see page 35 to 37, Paint and Surface Coatings - theory and practice edited by R.Lambourne and published by John Wiley and Sons.

Suitable extenders include calcium carbonate such as ground or precipitated chalk, and calcite; calcium sulphate such as Gypsum and anhydrite; barium sulphate such as barytes and blance fixe; silicates such as silica, diatomaceous silica, kaolin and other clays and hydrous aluminosilicates, talc and mica; calcium magnesium carbonate such as Dolomite; aluminium oxide and aluminium hydroxide.

Preferably clays are used because of their relatively small particle size and their contribution to viscosity, more preferably clays are used that have been refined for particle size, removal of impurities and brightness. More preferably, hydrous alumino silicates are used and most preferably the ASP range from BASF especially ASP 602, ASP 200, Hydrite R, Burgess types including No.60 and No.80 and the Kaolin Speswhite range from Imerys.

The extenders are preferably present in amounts ranging from 0 to 18wt%, more preferably from 0 to 16wt%, yet more preferably from 4 to 17wt% and most preferably from 7 to 16wt%.

The ratio of the combined weight of ingredients iii), iv) and v) : the combined weight of ingredients i) and ii) should be from 0.8:1 and 2.75:1. This ensures that drying of the colorant in or at the nozzles is prevented whilst maintaining the hardness of the derived dried paint film at acceptable levels. Preferably the ratio is from 0.9 to 2.5:1 more preferably from 1 to 2.1:1.

The combined weight of the rheology modifying clay iv) and the extender v) must be at least 2% when the amount of colour pigment is less that 51% otherwise the viscosity of the colorant is too low and the colorant will leak from the nozzles of those tinting machines fitted with open nozzles. Furthermore, the colorants in tinting machines are unstirred and if the viscosity is too low, the pigments, especially the denser ones, will tend to settle to the bottom of the container, making accurate dispensing into the basepaint impossible with the inevitable poor colour reproducibility in the final paint.

**Base paint**

Base paints are an essential component of any in-store tinting system. They are usually grouped into sets of three or four base paints (light, medium, deep and optionally a clear) to cover the range of colours in each product type. Different sets are required for solventborne and waterborne products and for products of different sheen levels. Each of the sets provides base paints of differing sheen levels.

**Volatile Organic Content**

The volatile organic content (VOC) of a composition comprises organic matter which is volatile at the temperatures of use, for architectural coatings this is typically 25°C. Variously, according to different national regulations around the world organic matter having a vapour pressure greater than $1.3N/m^2$ at 25°C or having a boiling point lower than a critical value (250°C measured at 1 atmosphere, 101.325 kP, in the EU) or evaporating under the conditions in service and damaging the atmosphere is regarded as volatile. For the purposes of the present invention organic matter is considered to be volatile if it has a vapour pressure greater than $1.3N/m^2$ at 25°C. The volatile organic content is measured in accordance with ISO 11890 Part 2.

The VOC, expressed as g/L is calculated according to the following equation

$$VOC(g/L) = \frac{1000.\sum W_{voc}(g)}{\left(\frac{W_{form}(g)}{\rho_{form}(g/ml)} - \frac{W_{water}(g)}{\rho_{water}(g/ml)}\right)}$$

Where $\sum W_{VOC}$ is the total VOC in the formulation; $W_{form}$ is the weight of the formulation; $W_{water}$ is the weight of water in the formulation and $\rho_{form}$ and $\rho_{water}$ represent the density of the formulation and water respectively. The symbols in brackets indicate the units used.

Preferably the colorants have VOC from 0 to 40g/L, more preferably from 0 to 30g/L, even more preferably from 0 to 20g/L, yet more preferably from 0 to 10g/L, still more preferably from 0.05 to 5g/L and most preferably from 0.05 to 3g/L.

Preferably, the total particulate solids of the colorant, by which we mean the colour pigment iii) + the rheology modifying clay iv) + the extender v) comprises or consists of from 4 to 65wt%, more preferably from 10 to 65, still more preferably from 20 to 50 and most preferably from 20 to 40wt%.

To minimise wear on tinting machine components the invention provides colorants of reduced high shear viscosity. For colorants with colour pigment content of greater than 40wt% the high shear viscosity is preferably between 0.2 and 1.0 Pa.s, more preferably between 0.3 and 0.85 Pa.s, even more preferably between 0.4 and 0.75 Pa.s and most preferably between 0.5 and 0.7 Pa.s. For colorants with pigment content of less than 40 wt% the high shear viscosity is preferably between,009 and 0.4 Pa s, more preferably between 0,01 and 0.3 Pa.s, even more preferably between0.02 and 0.2 Pa.s 0.25 and most preferably between0.02 and 0.1 Pa.s.

High shear viscosity is measured at 25°C with a Cone and Plate Viscometer, available from REL Ltd or Sheen Instruments and described in ISO 2884.

**Pigment**

Examples of colour pigments suitable for use in the invention are listed below and include;

Organic pigments for example:-

Monoazo pigments:

C.I. Pigment Brown 25; C.I. Pigment Orange 5,13, 36, 38, 64 and 67; C.I. Pigment Red 1, 2, 3, 4, 5, 8, 9, 12, 17, 22,23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 188, 191:1, 208, 210, 245, 247 and 251; C.I. Pigment Yellow 1, 3, 62, 65, 73, 74, 97, 120, 151, 154, 168, 181, 183 and 191; C.I. Pigment Violet 32;

Diazo pigments:

C.I. Pigment Orange 16, 34,44 and 72; C.I. Pigment Yellow 12, 13, 14, 16,17, 81, 83, 106, 113, 126, 127, 155, 174, 176 and 188;

Diazo condensation pigments:

C.I. Pigment Yellow 93, 95 and 128; pigments: C.I. Pigment Red 144, 166, 214, 220, 221, 242 and 262; C.I. Pigment Brown 23 and 41;

Anthanthrone pigments:

C.I. Pigment Red 168;

Anthraquinone pigments:

C.I. Pigment Yellow 147, 177 and 199; C.I. Pigment Violet 31;

Anthrapyrimidine pigments:

C.I. Pigment Yellow 108;

Quinacridone pigments:

C.I. Pigment Orange 48 and 49; C.I. Pigment Red 122, 202, 206 and 209; C.I. Pigment Violet 19;

Quinophthalone pigments:

C.I. Pigment Yellow 138;

Diketopyrrolopyrrole pigments:

C.I. Pigment Orange 71, 73 and 81; C.I. Pigment Red 254,255,264,270 and 272;

Dioxazine pigments:

C.I. Pigment Violet 23 and 37; C.I. Pigment Blue 80; flavanthrone pigments: C.I. Pigment Yellow 24;

Indanthrone pigments:

C.I. Pigment Blue 60 and 64;

Isoindoline pigments:

C.I. Pigments Orange 61 and 69; C.I. Pigment Red 260; C.I. Pigment Yellow 139 and 185;

Isoindolinone pigments:

C.I. Pigment Yellow 109, 110 and 173;

Isoviolanthrone pigments:

C.I. Pigment Violet 31;

Mental complex pigments:

C.I. Pigment Red 257; C.I. Pigment Yellow 117, 129, 150, 153 and 177; C.I. Pigment Green 8;

Perinone pigments:

C.I. Pigment Orange 43; C.I. Pigment Red 194;

Perylene pigments:

C.I. Pigment Black 31 and 32; C.I. Pigment Red 123, 149, 178, 179, 190 and 224; C.I. Pigment Violet 29;

Phthalocyanine pigments:

C.I. Pigment Blue 15, 15:1, 15:2, 15:3, 15:4, 15:6 and 16; C.I. Pigment Green 7 and 36;

Pyranthrone pigments:

C.I. Pigment Orange 51; C.I. Pigment Red 216;

Pyrazoloquinazolone pigments:

C.I. Pigment Orange 67; C.I. Pigment Red 251;

Thio indigo pigments:

C.I. Pigment Red 88 and 181; C.I. Pigment Violet 38;

Triarylcarbonium pigments:

C.I. Pigment Blue 1, 61 and 62; C.I. Pigment Green 1; C.I. Pigment Red 81, 81:1 and 169; C.I. Pigment Violet 1, 2, 3 and 27; C.I. Pigment Black 1 (aniline black); C.I. Pigment Yellow 101 (aldazine yellow); C.I. Pigment Brown 22.

Inorganic colour pigments for example:

White pigments: titanium dioxide (C.I. Pigment White 6), zinc white, pigment grade zinc oxide; zinc sulphide, lithopone;

Black pigments: iron oxide black (C.I. Pigment Black 11), iron manganese black, spinel black (C.I. Pigment Black 27); carbon black (C.I. Pigment Black 7);

Chromatic pigments: chromium oxide, chromium oxide hydrate green; chrome green (C.I. Pigment Green 48); cobalt green (C.I. Pigment Green 50); ultramarine green; cobalt blue (C.I. Pigment Blue 28 and 36; C.I. Pigment Blue 72); ultramarine blue; manganese blue; ultramarine violet; cobalt violet; manganese violet; red iron oxide (C.I. Pigment Red 101); cadmium sulfoselenide (C.I. Pigment Red 108); cerium sulphide (C.I. Pigment Red 265); molybdate red (C.I. Pigment Red 104); ultramarine red; brown iron oxide (C.I. Pigment Brown 6 and 7), mixed brown, spinel phases and corundum phases (C.I. Pigment Brown 29, 31, 33, 34, 35, 37,39 and 40), chromium titanium yellow (C.I. Pigment Brown 24), chrome orange; cerium sulphide (C.I. Pigment Orange 75); yellow iron oxide (C.I. Pigment Yellow 42); nickel titanium yellow (C.I. Pigment Yellow 53; C.I. Pigment Yellow 157, 158, 159, 160, 161, 162, 163, 164 and 189); chrlow 37 and 35); chrome yellow (C.I. Pigment Yellow 34); bismuth vanidate (C.I. Pigment Yellow 184).

Preferably the pigments are selected from the group consisting of CI Pigment Red 101, 112, 122, 188, 254; CI Pigment Yellow 74; CI Pigment Violet 19; CI Pigment Blue 15; CI Pigment Green7; CI Pigment White 6 and CVI Pigment Black 7.

The CI designation refers to Colour Index, a system describing pigments published online by the society of Dyers and Colorists and the American Association of Textile Chemists and Colorists (http://www.colour-index.org/).

Lustre pigments: platelet-shaped pigments having a monophasic or polyphasic construction whose colour play is marked by the interplay of interference, reflection and absorption phenomena including aluminium platelets and aluminium, iron oxide and mica platelets bearing one or more coats, especially of metal oxides.

Such pigments are commercially available, for example, from BASF, Clariant, Ciba, Degussa, Elementis and Rockwood.

Usually, only one pigment is used in each colorant to but more may be used to achieve the correct hue. Preferably, only one is used.

**Additives**

The colorants may also contain additives selected from the group consisting of biocides, antifoams, flow aids and corrosion inhibitors.

**Ingredients used in the examples**

Stabilising agents

Bermodol 2525 is a coco monoethanolamide 5EO (non-ionic)
Bermadol 2532 is a cocomonoethanolamide 12 EO (non-ionic)
Bermadol 2543 is oleyl monoethanolamide 4EO (non-ionic)
Dispersogen LFH is histyrylphenol polyoxyethylene phosphoric acid ester (anionic)
Nuosperse FA196 alcohol polyoxyethylene phosphoric acid ester (anionic)
Soya Lecithin phospholipid (zwitterionic)
Disperbyk 102 copolymer with acidic groups (anionic)

Humectants

Propylene Glycol
PEG 200 is polyethylene glycol of molecular weight 200 Daltons
PEG 400 is polyethylene glycol of molecular weight 400 Daltons
Acrosolv TPnB

Pigments

Copperas R-3098D (red iron oxide) and YZ 1888 Yellow Iron Oxide
are available Elementis Pigments Inc.
Red Iron oxide 212M, and Filo Red Oxide 216M (red iron oxide) are available from Rockwood Pigments Inc.
Raven 420 beads (black) available from Columbian Chemicals Co., USA Hostaperm Pink E-WD 122 Quinacridone Magenta is available from ClariantHostaperm BT-627-D blue pigment available from Clariant
Ti-Pure R-960-28 white pigment available from DuPont

Biocides

Rocima V189 and Dowicil 75 are available from Dow
Polyphase AF3 available from Troy Corporation
Polyphase PW40 available from Troy Corporation
Acticide OTW available from Thor Specialities
Kathon LX 1.5% available from Dow
Proxel BD-20 available from Arch

Rheology Modifier

Attagel 50 is an attapulgite clay available from BASF.
Bentone EW is a bentonite clay available from Elementis Specialities

Extenders

ASP 602 is a hydrous alumino silicate available from BASF.

Antifoam

DEE FO P1-35 is available from Munzing Chemie GmbH
EFKA 2550 available from BASF
Aqueous clear base paint
The formulation of the aqueous base paint used in the examples is:

| Ingredient | Wt% |
| --- | --- |
| Water | 30.67 |
| *Acrylic latex | 48.09 |
| Alumino-silicate | 11.49 |
| Calcium carbonate | 5.22 |
| Dispersant 1 | 0.63 |
| Dispersant 2 | 0.10 |
| Surfactant | 0.31 |
| 2-amino-2-methyl propan-1-ol | 0.18 |
| Biocide | 0.15 |
| Paraffinic distillate | 0.94 |
| Texanol | 1.63 |
| Cellulosic thickener | 0.60 |
| * nv =46.5%, Tg =27°C | |

Solventborne clear base paint

The formulation of the solventborne base paint used in the examples is:

| Ingredient | wt% |
| --- | --- |
| Long oil alkyd | 44.59 |
| Mineral spirits | 24.26 |
| Rheology modifier | 13.64 |
| Calcium carbonate | 2.06 |
| Surfactant | 12.13 |
| Co, Zr, Ca driers | 1.94 |
| Methyl ethyl ketoxime | 1.38 |

The invention will now be illustrated using the following examples

**Test methods used to evaluate the examples.**

**Paint Hardness**

Pendulum Hardness

Add required amount of colorant to the chosen base paint and mix thoroughly. Draw down the resultant paint on 4 x 6inch glass panels. The wet film thickness should be adjusted accordingly to achieve comparable dry film weights of about 75 microns. Allow to dry overnight in a temperature and humidity controlled environment. The dried film pendulum hardness is measured using the Erichsen indentometer (model 299/300) available from Erichsen GmBH & CoKg, Germany. The more the number of swings, the harder the film.

Pencil Hardness

This was assessed according to the method described in ASTM D-3363.
For guidance the scale runs 6B, 5B...... B, F, H .....6H, 7H from soft to hard.

**Sand Dry**

The sand dry test described hereinbelow was used as a quick method to obtain comparative data on the propensity of the colorants to block nozzles.
Colorant is drawn down on a 12x4 inch glass panel using a three holed 100 micron draw down block. A colorant of known dry time and nozzle blocking performance should be included in the test.
The glass panel is placed on a Brook sand drier and the front edge of the sand reservoir on the colorant. The sand will drop along the length of the glass panel at a constant rate over a period of 12 hours. The colorant is dry when the sand no longer sticks to the colorant. The longer the dry time the less likely is the colorant to block nozzles.

**Syringe Test**

The syringe test is used to assess nozzle blocking of colorants and also to assess the flowability of the dispersing agents and the stabilising agent.

Nozzle Blockage

The colorant to be tested is first de-aerated by centrifuging under vacuum. Thirty $cm^3$ of the sample is drawn into a 30 $cm^3$ syringe (available from B.Braun Medical Ltd, Sheffield, England, S35 2PW) through its nozzle (length 15mm and internal diameter of 2mm). The syringe, with plunger in place and the nozzle open, is supported vertically with the open nozzle pointing downwards and stored at 25°C at ambient humidity. The colorant is non-blocking if it can be dispensed by hand after 18 hours storage.

Flowability

The non-volatile organic liquid or stabilising agent is tested is in the same way as the colorant but without prior de-aeration
The invention will now be illustrated by the following examples

**Water Spot test**

A film is drawn down on 4 x 6inch glass panels. The dry paint film should be of thickness 75micron.
The films are allowed to dry overnight at 25°C at ambient humidity before testing. A drop of water of 1-2$cm^3$ is placed on a small area of the panel (making sure film is unblemished underneath).
The film beneath the droplet is monitored (blot with a tissue if necessary) for blistering.
The water droplet can be reapplied if needed.
The time of blistering is noted, it is usual for water based films to blister faster than solvent based.

**Examples**

Method

In a first stage all of the components, other than the pigment and approximately 50% of the water, are mixed for 10 minutes at 500rpm using a high speed disperser (HSD). Following this period, the pigment is added with slow stirring (500rpm). Once all of the pigment is incorporated then the speed is increased to 1000rpm and left to mix for 30minutes.

In a second stage, the colorant is passed through a horizontal bead mill (using 1mm glass beads as the grinding media and mill speed from 1000-1500rpm).

After bead milling (until fineness of grind is less than 10 micron) the rest of the water is added whilst stirring using the HSD (500rpm).

Example 1 and Comparative examples A and B of colorant

| | Ex 1 | Ex A | Ex B |
|---|---|---|---|
| **Ingredient** | %wt | | |
| Water 1 | 17.00 | 13.33 | 5.00 |
| Bermadol 2532 | 2.18 | 1.46 | |
| Bermadol 2543 | 2.92 | 3.89 | 10.22 |
| Bermadol 2525 | | | 10.22 |
| Dispersogen LFH | 3.73 | | |
| Nuosperse FA 196 | | 3.17 | |
| Disperbyk 102 | | | 1.65 |
| Rocima V 189 | | 0.30 | |
| Polyphase AF3 | | | 0.33 |
| Acticide OTW | | | 0.30 |
| DEE FO PI-35 | 0.20 | 0.30 | |
| PEG 400 | 10.00 | 0.55 | |
| PEG 200 | | | 5.01 |
| Propylene Glycol | | 3.00 | |
| Soya Lecithin | | | 1.40 |
| Arcosolve TPnB | | | 4.21 |
| Dowicil 75 | 0.30 | | |
| EFKA 2550 | | | 0.30 |
| Copperas R-3098D | 38.27 | | |
| Red Iron Oxide 212M | | 61.00 | |
| Duploxide 216M | | | 60.03 |
| ATTAGEL 50 | 2.42 | | |
| ASP 602 | 6.31 | | |
| Water 2 | 16.66 | 13.00 | 1.33 |

Colorant properties

| | >12 hrs | 1hr | 8hrs |
|---|---|---|---|
| Sand Dry | | | |
| Nozzle blockage (syringe test) | Pass | Fail | Pass |
| Stormer Viscosity (Krebs Units) | 67 | 90 | 82 |

The sand dry test and the syringe test correlate well with nozzle blockage in tinting machines.

Paints were made by adding 25cm$^3$ of colorant to 200cm$^3$ of an aqueous base paint and a solventborne base paint. The equivalent weights (g) are shown in the table below:

| | | | Paint | | | |
|---|---|---|---|---|---|---|
| Ingredient | 1.1 | 1.2 | A.1 | A.2 | B.1 | B.2 |
| Example 1 | 41.5 | 41.5 | | | | |
| Comparative Example A | | | 50.3 | 50.3 | | |
| Comparative Example B | | | | | 48.3 | 48.3 |
| Aqueous Base Paint | 227.8 | | 227.8 | | 227.8 | |
| Solventborne Base Paint | | 198.9 | | 198.9 | | 198.9 |
| | | | | | | |
| **Paint properties** | | | | | | |
| Pendulum Hardness | 22 | 20 | 30 | 17 | 17 | 12 |
| Pencil Hardness | 4B | 2B | 4B | 3B | 6B | 6B |
| Block resistance | 5 | 5 | 5 | 4 | 4 | 4 |
| Water spot | Pass | Pass | Pass | Pass | Fail | Fail |

In summary, the example 1 of the invention does not block nozzles and has acceptable film properties when converted to aqueous and solventborne paints (1.1 and 1.2 respectively) and allowed to dry; whilst comparative example A blocks nozzles and when converted to paint has generally acceptable film properties; comparative example B on the other hand does not block nozzles but generally has poor film properties.

Examples 2-4 show further embodiments of the invention using other pigments.

| | Ex 2 | Ex 3 | Ex 4 |
|---|---|---|---|
| Ingredient | %wt | % wt | %wt |
| Water | 48.67 | 49.32 | 51.33 |
| Bermadol 2532 | 0.38 | 1.02 | 1.05 |
| Bermadol 2525 | | 0.68 | 0.71 |
| Bermadol 2543 | 0.95 | 2.20 | 2.05 |
| Dispersogen LFH | 1.28 | 0.50 | 2.15 |
| Yelkin TS | 0.00 | 0.39 | 0.00 |
| Orotan 731 | 0.00 | 0.74 | 0.00 |
| DEE FO PI-35 | 0.07 | 0.16 | 0.34 |
| PEG 400 | 15.77 | 19.21 | 15.34 |
| Dowicil75 | 0.11 | 0.21 | 0.21 |
| KATHON LX 1.5% BIOCIDE | 0.01 | 0.09 | 0.09 |
| PROXEL BD-20 | 0.01 | 0.10 | 0.11 |
| POLYPHASE PW40 | 0.03 | 0.26 | 0.26 |
| TI-PURE R-980-28 | 28.98 | 0.00 | 0.00 |

(continued)

|  | Ex 2 | Ex 3 | Ex 4 |
|---|---|---|---|
| Raven 420 Beads | 0.00 | 5.97 | 0.00 |
| Hostaperm BT-627-D | 0.00 | 0.00 | 8.64 |
| ATTAGEL 50 | 0.74 | 4.23 | 4.44 |
| ASP 602 | 2.21 | 14.93 | 13.27 |
| Bentone EW | 0.80 |  |  |

Colorant properties

| Sand Dry | >12 hrs | > 12hrs | >12 hrs |
|---|---|---|---|
| Nozzle blockage (syringe test) | Pass | Pass | Pass |
| Stormer Viscosity (Krebs Units) | 67 | 75 | 87 |

These sand dry and syringe test results are consistent with the absence of nozzle blockage in tinting machines.

Paints were made by adding 25cm$^3$ of colorant to 200cm$^3$ of an aqueous base paint and a solventborne base paint. The equivalent weights (g) are shown in the table below:

|  |  |  |  | Paint |  |  |  |
|---|---|---|---|---|---|---|---|
| **Ingredient** | 2.1 | 2.2 | 3.1 | 3.2 | 4.1 | 4.2 |
| Example 2 | 35.0 | 35.0 |  |  |  |  |
| Example 3 |  |  | 30.9 | 30.9 |  |  |
| Example 4 |  |  |  |  | 30.1 | 30.1 |
| Aqueous Base Paint | 227.8 |  | 227.8 |  | 227.8 |  |
| Solventborne Base Paint |  | 198.9 |  | 198.9 |  | 198.9 |
| **Paint properties** |  |  |  |  |  |  |
| Pendulum Hardness | 8 | 16 | 11 | 14 | 11 | 15 |
| Pencil Hardness | 5B | F | 3B | B |  |  |
| Water spot | Pass | Pass |  |  |  |  |

In summary, examples 2, 3 and 4 of the invention also do not block nozzles and have acceptable film properties when converted to aqueous and solventborne paints (1.1 and 1.2 respectively) and allowed to dry.

**Claims**

1.  An aqueous liquid colorant composition having a volatile organic content up to 50g/l and suitable for colouring aqueous or solventborne architectural coatings and basepaints comprising based on the total weight of the composition,

> i) from 2 to 22% of non-volatile organic liquid having a vapour pressure up to 1.3 N/m$^2$ at 25°C
> ii) from 2 to 13% of stabilising agent
> iii) from 4 to 77% of colour pigment
> iv) from 0.1 to 8% of rheology modifying clay
> v) from 0 to 20% of extender
> wherein the ratio of the combined weight of iii)+iv)+v) : the combined weight of i)+ii) is from 0.8 to 2.75:1 and the combined weight of the non-volatile organic liquid i) and the stabilising agent ii) is no greater than 28% and the combined weight of the rheology modifying clay iv) and the extender v) is at least 2% when the amount of colour pigment is less than 51%.

2.   A colorant composition according to claim 1 wherein the composition is free of organic rheology modifiers.

3.   A colorant composition according to claim 1 or claim 2 wherein the non-volatile organic liquid comprises from 4 to 19.5wt%.

4.   A colorant composition according to any one of the previous claims wherein the non-volatile organic liquid comprises or consists of polyethylene glycol.

5.   A colorant composition according to claim 4 wherein the polyethylene glycol has a molecular weight at least 200 Daltons.

6.   A colorant composition according to claim 5 wherein the polyethylene glycol comprises or consists of polyethylene glycol of molecular weight of from 200 to 800 Daltons.

7.   A colorant composition according to any one of the previous claims wherein the stabilising agent comprises from 2 to 12wt%.

8.   A colorant composition according to any one of the previous claims wherein the stabilising agent has a number average molecular weight up to 2000 Daltons.

9.   A colorant composition according to any one of the previous claims wherein the stabilising agent is anionic and/or non-ionic.

10.  A colorant composition according to any one of the previous claims wherein the rheology-modifying clay comprises from 1 to 8 wt%.

11.  A colorant composition according to any one of the previous claims wherein the extender comprises from 0 to 16 wt%.

12.  A colorant composition according to any one of the previous claim wherein the ratio of the combined weight of iii)+iv)+v) : the combined weight of i)+ii) is from 1 to 2.1:1

13.  A colorant composition according to any one of the previous claims wherein the combined weight of the non-volatile organic liquid i) and the stabilising agent ii) is no greater than 26%

14.  A colorant composition according to any one of the previous claims and which is free of polymeric binder.

15.  A colorant composition according to any one of the previous claims wherein the calculated particulate solids content of the composition is from 4 to 65 wt%.

16.  A colorant composition according to any one of the previous claims wherein the colour pigment is selected from the group consisting of CI Pigment Red 101, 112, 122, 188, 254; CI Pigment Yellow 74; CI Pigment Violet 19; CI Pigment Blue 15; CI Pigment Green7; CI Pigment White 6 and CI Pigment Black 7.

17.  An architectural coating composition comprising or consisting of at least one colorant according to any one of the preceding claims and at least one base paint.

18.  A tinting scheme comprising or consisting of at least one base paint and at least one colorant according to any one of claims 1 to 16.

19.  A tinting machine for in-store tinting of base paint, comprising or consisting of at least one colorant according to any one of claims 1 to 16, in a container, the container fitted or connected to an exit nozzle.

20.  A tinting machine according to claim 19 wherein the exit nozzle is of the open nozzle type.

21.  A tinting machine according to claim 19 or claim 20 wherein the colorant is packaged in a container having a volume of from 0.5 to 5 litres.

22.  A tinting machine according to any one of claims 19 to 21 wherein the base paint is packaged in a container having a volume of from 0.5 to 25 litres.

23. A method for in-store production of architectural coating including the steps of dispensing at least one colorant selected from a tinting machine according to any one of claims 19 to 22 into a base paint.

**Patentansprüche**

1. Wässrige flüssige Farbmittelzusammensetzung mit einem Gehalt an flüchtigen organischen Verbindungen von bis zu 50 g/l und geeignet für das Färben von wässrigen oder lösemittelhaltigen architektonischen Beschichtungen und Grundfarben, die, basierend auf dem Gesamtgewicht der Zusammensetzung, folgendes umfasst:

   i) von 2 bis 22% einer nichtflüchtigen organischen Flüssigkeit mit einem Dampfdruck von bis zu 1,3 N/m$^2$ bei 25°C
   ii) von 2 bis 13% eines Stabilisierungsmittels
   iii) von 4 bis 77% eines Farbpigmentes
   iv) von 0,1 bis 8% von Rheologie modifizierendem Ton
   v) von 0 bis 20% eines Streckmittels
   wobei das Verhältnis des Gesamtgewichts von iii)+iv)+v) : dem Gesamtgewicht von i)+ii) von 0,8 bis 2,75:1 beträgt, und
   das Gesamtgewicht der nichtflüchtigen organischen Flüssigkeit i) und des Stabilisierungsmittels ii) nicht größer als 28% ist, und
   das Gesamtgewicht des Rheologie modifizierenden Tons iv) und des Streckmittels v) mindestens 2% beträgt, wenn die Menge des Farbpigmentes weniger als 51 % beträgt.

2. Farbmittelzusammensetzung nach Anspruch 1, wobei die Zusammensetzung frei von organischen Rheologiemodifizierern ist.

3. Farbmittelzusammensetzung nach Anspruch 1 oder Anspruch 2, wobei die nichtflüchtige organische Flüssigkeit von 4 bis 19,5 Gew.-% umfasst.

4. Farbmittelzusammensetzung nach einem der vorhergehenden Ansprüche, wobei die nichtflüchtige organische Flüssigkeit Polyethylenglykol umfasst oder daraus besteht.

5. Farbmittelzusammensetzung nach Anspruch 4, wobei das Polyethylenglykol ein Molekulargewicht von mindestens 200 Dalton hat.

6. Farbmittelzusammensetzung nach Anspruch 5, wobei das Polyethylenglykol ein Polyethylenglykol mit einem Molekulargewicht von 200 bis 800 Dalton umfasst oder daraus besteht.

7. Farbmittelzusammensetzung nach einem der vorhergehenden Ansprüche, wobei das Stabilisierungsmittel von 2 bis 12 Gew.-% umfasst.

8. Farbmittelzusammensetzung nach einem der vorhergehenden Ansprüche, wobei das Stabilisierungsmittel einen Zahlenmittelwert des Molekulargewichts von bis zu 2000 Dalton hat.

9. Farbmittelzusammensetzung nach einem der vorhergehenden Ansprüche, wobei das Stabilisierungsmittel anionisch und/oder nichtionisch ist.

10. Farbmittelzusammensetzung nach einem der vorhergehenden Ansprüche, wobei der Rheologie modifizierende Ton von 1 bis 8 Gew.-% umfasst.

11. Farbmittelzusammensetzung nach einem der vorhergehenden Ansprüche, wobei das Streckmittel von 0 bis 16 Gew.-% umfasst.

12. Farbmittelzusammensetzung nach einem der vorhergehenden Ansprüche, wobei das Verhältnis des Gesamtgewichts von iii)+iv)+v) : dem Gesamtgewicht von i)+ii) von 1 bis 2,1:1 beträgt.

13. Farbmittelzusammensetzung nach einem der vorhergehenden Ansprüche, wobei das Gesamtgewicht der nichtflüchtigen organischen Flüssigkeit i) und des Stabilisierungsmittels ii) nicht größer als 26% ist.

14. Farbmittelzusammensetzung nach einem der vorhergehenden Ansprüche, die frei von einem polymeren Bindemittel ist.

15. Farbmittelzusammensetzung nach einem der vorhergehenden Ansprüche, wobei der berechnete Gehalt an partikelförmigen Feststoffen der Zusammensetzung von 4 bis 65 Gew.-% beträgt.

16. Farbmittelzusammensetzung nach einem der vorhergehenden Ansprüche, wobei das Farbpigment aus der Gruppe ausgewählt ist, aufweisend C.I. Pigmentrot 101, 112, 122, 188, 254; C.I. Pigmentgelb 74; C.I. Pigmentviolett 19; C.I. Pigmentblau 15; C.I. Pigmentgrün 7; C.I. Pigmentweiß 6 und C.I. Pigmentschwarz 7.

17. Architektonische Beschichtungszusammensetzung, umfassend oder bestehend aus mindestens ein Farbmittel nach einem der vorhergehenden Ansprüche, und mindestens eine Grundfarbe.

18. Tönungssystem, umfassend oder bestehend aus mindestens eine Grundfarbe und mindestens ein Farbmittel nach einem der Ansprüche 1 bis 16.

19. Tönungsautomat zum Tönen von Grundfarben auf Vorrat, umfassend oder bestehend aus mindestens ein Farbmittel nach einem der Ansprüche 1 bis 16, in einem Behälter, wobei der Behälter an einer Austrittsdüse befestigt oder daran angeschlossen ist.

20. Tönungsautomat nach Anspruch 19, wobei die Austrittsdüse eine offene Düse ist.

21. Tönungsautomat nach Anspruch 19 oder Anspruch 20, wobei das Farbmittel in einem Behälter mit einem Volumen von 0,5 bis 5 Litern verpackt ist.

22. Tönungsautomat nach einem der Ansprüche 19 bis 21, wobei die Grundfarbe in einem Behälter mit einem Volumen von 0,5 bis 25 Litern verpackt ist.

23. Verfahren zur Herstellung auf Vorrat von architektonischen Beschichtungen, aufweisend die Schritte der Abgabe mindestens eines ausgewählten Farbmittels aus einem Tönungsautomaten nach einem der Ansprüche 19 bis 22 in eine Grundfarbe.

**Revendications**

1. Composition de colorant liquide aqueuse ayant une teneur en composés organiques volatils allant jusqu'à 50 g/l et appropriée pour colorer des peintures de base et des revêtements architecturaux aqueux ou à base de solvant comprenant, sur la base du poids total de la composition,

   i) de 2 à 22% d'un liquide organique non volatil ayant une pression de vapeur allant jusqu'à 1,3 N/m$^2$ à 25°C
   ii) de 2 à 13% d'un agent stabilisant
   iii) de 4 à 77% d'un pigment coloré
   iv) de 0,1 à 8% d'une argile modifiant la rhéologie
   v) de 0 à 20% d'une matière de charge
   où le rapport du poids combiné de iii)+iv)+v) : le poids combiné de i)+ii) est de 0,8 à 2,75 : 1 et
   le poids combiné du liquide organique non volatil i) et de l'agent stabilisant ii) est inférieur ou égal à 28% et
   le poids combiné de l'argile modifiant la rhéologie iv) et de la matière de charge v) est d'au moins 2% lorsque la quantité de pigment coloré est inférieure à 51%.

2. Composition de colorant selon la revendication 1, dans laquelle la composition est exempte de modificateurs de rhéologie organiques.

3. Composition de colorant selon la revendication 1 ou 2, dans laquelle le liquide organique non volatil comprend de 4 à 19,5% en poids.

4. Composition de colorant selon l'une quelconque des revendications précédentes, dans laquelle le liquide organique non volatil comprend ou est constitué de polyéthylène glycol.

5. Composition de colorant selon la revendication 4, dans laquelle le polyéthylène glycol a un poids moléculaire d'au moins 200 Daltons.

6. Composition de colorant selon la revendication 5, dans laquelle le polyéthylène glycol comprend ou est constituée de polyéthylène glycol de poids moléculaire allant de 200 à 800 Daltons.

7. Composition de colorant selon l'une quelconque des revendications précédentes, dans laquelle l'agent stabilisant comprend de 2 à 12% en poids.

8. Composition de colorant selon l'une quelconque des revendications précédentes, dans laquelle l'agent stabilisant a un poids moléculaire moyen en nombre allant jusqu'à 2000 Daltons.

9. Composition de colorant selon l'une quelconque des revendications précédentes, dans laquelle l'agent stabilisant est anionique et/ou non-ionique.

10. Composition de colorant selon l'une quelconque des revendications précédentes, dans laquelle l'argile modifiant la rhéologie comprend de 1 à 8% en poids.

11. Composition de colorant selon l'une quelconque des revendications précédentes, dans laquelle la matière de charge comprend de 0 à 16% en poids.

12. Composition de colorant selon l'une quelconque des revendications précédentes dans laquelle le rapport du poids combiné de iii)+iv)+v) : le poids combiné de i)+ii) est de 1 à 2,1 : 1.

13. Composition de colorant selon l'une quelconque des revendications précédentes, dans laquelle le poids combiné du liquide organique non volatil i) et de l'agent stabilisant ii) est inférieur ou égal à 26%.

14. Composition de colorant selon l'une quelconque des revendications précédentes et qui est exempte d'un liant polymère.

15. Composition de colorant selon l'une quelconque des revendications précédentes, dans laquelle la teneur en solides particulaires calculée de la composition est de 4 à 65% en poids.

16. Composition de colorant selon l'une quelconque des revendications précédentes, dans laquelle le pigment coloré est choisi dans le groupe constitué de Pigment Rouge CI 101, 112, 122, 188, 254 ; de Pigment Jaune CI 74 ; de Pigment Violet CI 19 ; de Pigment Bleu CI 15 ; de Pigment Vert CI 7 ; de Pigment Blanc CI 6 et de Pigment Noir CI 7.

17. Composition de revêtement architecturale comprenant ou est constituée d'au moins un colorant selon l'une quelconque des revendications précédentes et d'au moins une peinture de base.

18. Schéma de mise à la teinte comprenant ou est constitué d'au moins une peinture de base et d'au moins un colorant selon l'une quelconque des revendications 1 à 16.

19. Machine à teindre pour une teinture interne d'une peinture de base, comprenant ou est constituée d'au moins un colorant selon l'une quelconque des revendications 1 à 16, dans un récipient, le récipient étant monté ou relié à une buse de sortie.

20. Machine à teindre selon la revendication 19, dans laquelle la buse de sortie est du type buse ouverte.

21. Machine à teindre selon la revendication 19 ou 20, dans laquelle le colorant est conditionné dans un récipient ayant un volume allant de 0,5 à 5 litres.

22. Machine à teindre selon l'une quelconque des revendications 19 à 21, dans laquelle la peinture de base est conditionnée dans un récipient ayant un volume allant de 0,5 à 25 litres.

23. Procédé pour la production interne d'un revêtement architectural comportant les étapes qui consistent à distribuer au moins un colorant choisi dans une machine à teinter selon l'une quelconque des revendications 19 à 22 dans une peinture de base.

**REFERENCES CITED IN THE DESCRIPTION**

**Non-patent literature cited in the description**

- Paint and Surface Coatings - theory and practice. John Wiley and Sons, 35-37